# EUROPEAN PATENT SPECIFICATION

(11) **EP 4 539 206 B1**
(45) Date of publication and mention of the grant of the patent: **02.12.2026**
(21) Application number: 23202697.1
(22) Date of filing: 10.10.2023
(51) Int. Cl.: H01M 10/613, H01M 10/625, H01M 10/643, H01M 10/65, H01M 10/6554, H01M 10/6556, H01M 10/6557, H01M 10/6567, H01M 10/6569, H01M 50/204, H01M 50/249, H01M 50/325, H01M 50/30

(54) **BATTERY HOLDER WITH FLUID COOLING**
BATTERIEHALTER MIT FLÜSSIGKEITSKÜHLUNG
SUPPORT DE BATTERIE À REFROIDISSEMENT PAR FLUIDE

(43) Date of publication of application: 16.04.2025
(73) Proprietor: VOLVO TRUCK CORPORATION, 405 08 Göteborg (SE)
(72) Inventor: MOVAGHAR, Amirreza, SE-412 76 GÖTEBORG (SE); IRANNEZHAD, Mike, SE-411 20 GÖTEBORG (SE); GHOSH, Pramathesh, SE-417 26 GÖTEBORG (SE)
(74) Representative: Kransell & Wennborg KB

(56) References cited:
- EP-A1- 4 156 382
- WO-A1-2023/186909
- DE-A1- 102021 106 200
- US-A1- 2018 145 382
- US-A1- 2019 229 384
- US-A1- 2022 361 367

## Description

### TECHNICAL FIELD

The disclosure relates generally to battery packs for vehicles. In particular aspects, the disclosure relates to a battery pack comprising a fluid cooling solution. The disclosure can be applied to heavy-duty vehicles, such as trucks, buses, and construction equipment, among other vehicle types. The disclosure can be applied to marine vessels and the like. Although the disclosure may be described with respect to a particular vehicle, the disclosure is not restricted to any particular vehicle.

### BACKGROUND

Maintaining the ideal temperature range within a battery pack is essential for both short-term performance and long-term durability. Precise temperature control ensures that the battery operates at its peak efficiency, delivering the expected capacity and output power for a wide range of applications. Simultaneously, it safeguards the battery's longevity by preventing temperature extremes, which can accelerate chemical degradation and shorten its operational lifespan. Furthermore, uniform temperature distribution across the battery module is critical to prevent localized stress and uneven cell performance. Inconsistent temperatures can lead to reduced overall performance, capacity loss, uneven aging between cells and safety concerns. Therefore, it is desirable to develop cooling solutions which are both efficient and which promotes a uniform temperature distribution in a battery pack.

DE 10 2021 106200 A1 describes a heat sink for an electrical energy store where the heat sink is formed by a storage enclosure lower part which for this purpose has a double-walled design and thus comprises an intermediate space for the passage of a flowing coolant. The intermediate space can be joined to a cooling circuit in which the coolant circulates.

### SUMMARY

According to a first aspect of the disclosure, it is provided a battery holder for holding a plurality of battery cells for a vehicle, the battery holder having a base plate comprising: a plurality of through openings, each opening being configured to allow venting of gas from a battery cell; and a closed compartment being partially filled with a fluid, wherein the fluid comprises a phase change material, and wherein the phase change material is in solid form at a normal operating temperature of the battery. The first aspect of the disclosure may seek to improve cooling in a battery pack by providing a fluid-filled compartment where the fluid acts to spread heat generated by battery cells, thereby reducing the risk of uneven temperature distribution in a battery comprising a plurality of battery cells. A technical benefit of using a phase change material may include that the phase change material in the closed compartment is fluid only at temperatures where cooling or heat redistribution is required. A technical benefit may further include that the material in the closed compartment is in solid form in situation where there is no need for heat redistribution. A technical benefit may further include that the use of a phase change material reduces the formation gases in the closed compartment to thereby avoid pressure build up and leakage from or rupture of the compartment. Moreover, by using phase change materials in solid form, even if a phase change to gas form occurs, the material pass through two phase changes (solid-to-liquid and liquid-to-gas) which means that more energy is absorbed to resist sudden temperature fluctuations.

Optionally in some examples, including in at least one preferred example, the closed compartment extends throughout the extension of the base plate in the plane of the base plate. A technical benefit may include that heat can be spread evenly over the entire battery holder, thereby facilitating an even temperature distribution throughout the battery holder.

Optionally in some examples, including in at least one preferred example, the closed compartment comprises a plurality of sub-compartments, each sub-compartment being partially filled with a fluid. A technical benefit may include that the size and shape of sub-compartments can be adapted to a distribution of battery cells in the battery holder.

Optionally in some examples, including in at least one preferred example, the base plate further comprises at least one groove arranged on a side of the base plate opposite the side configured to hold the battery cell and extending to at least a first edge portion of the base plate, and wherein each through-opening ends in the at least one groove. A technical benefit may include that the groove can act as a vent channel in case of a thermal runaway event where heated gases and particles need to be lead away from the battery cells to avoid a chain reaction within the battery. That the through openings lead to the groove also means that any heated gas or particles is cooled by the fluid in the closed compartment both in the flow path from the battery cell to the groove, i.e. through the through opening, as well as when flowing in the groove as such.

Optionally in some examples, including in at least one preferred example, wherein the at least one groove extends across the base plate from a first edge portion of the base plate to a second edge portion of the base plate opposite the first edge portion. A technical benefit may include that the groove thereby can transport gas and particles from any portion of base plate to an edge of the base plate for evacuation.

Optionally in some examples, including in at least one preferred example, the at least one groove is substantially straight. A technical benefit may include that the flow through the groove is uninterrupted, providing a flow path with a low flow resistance.

Optionally in some examples, including in at least one preferred example, the at least one groove comprises a protective coating. A technical benefit may include that the groove is resilient against high temperature gases and particles coming from a battery cell during thermal runaway.

Optionally in some examples, including in at least one preferred example, the protective coating comprises glass fiber. A technical benefit may include that glass fiber is resilient against high temperature gases and particles which reduces the risk that the groove is damaged.

Optionally in some examples, including in at least one preferred example, an interior surface of the closed compartment comprises surface structures configured to facilitate heat transfer between the base plate and the fluid. A technical benefit may include that heat transfer between battery cells and the fluid in the closed compartment can be improved owing to the increased surface area of the interior walls.

Optionally in some examples, including in at least one preferred example, the through openings comprise sidewalls located between the opening and the closed compartment so that the fluid is in contact with the sidewalls. A technical benefit may include that gas and particles flowing from battery cells can be cooled by the fluid also during passage through the through openings.

Optionally in some examples, including in at least one preferred example, wherein the phase change material has a phase change temperature for transformation from solid phase to liquid phase in the range of 20°C to 30°C. A technical benefit may include that the phase change material is in solid form at a common operating temperature for battery cells.

Optionally in some examples, including in at least one preferred example, wherein the phase change material has a phase change temperature for transformation from solid phase to liquid phase in the range of 35°C to 45°C. A technical benefit may include that the phase change material is in solid form up to temperatures which may damage the battery cells.

Optionally in some examples, including in at least one preferred example, the phase change material has a phase change temperature for transformation from solid phase to liquid phase in the range of 110°C to 130°C. A technical benefit may include that the phase change material is in solid form up to temperatures which indicate the onset of a thermal runaway event.

Optionally in some examples, including in at least one preferred example, the fluid comprises a mix of materials. A technical benefit may include that the properties of the fluid can be tailored to suit any particular application in terms of for example fluidity, flammability, heat capacity etc.

Optionally in some examples, including in at least one preferred example, the fluid is selected from the group comprising dielectric oil, water glycol and water. A technical benefit may include that the fluid has a high heat capacity leading to efficient heat redistribution and resistance to temperature increase. A further benefit may include that a dielectric fluid is reducing the risk of electrical faults in surrounding system and in a battery in case of leakage of the fluid.

Optionally in some examples, including in at least one preferred example, a fill level of fluid in the closed compartment is in the range of 50% to 70%. A technical benefit may include that the fluid is then allowed to splash around to efficiently transfer heat within the compartment.

Optionally in some examples, including in at least one preferred example, the base plate further comprises dividing walls configured to form cell compartments for holding battery cells. A technical benefit may include that battery cells can be arranged in the battery holder guided by the cell compartments.

Optionally in some examples, including in at least one preferred example, it is provided a vehicle comprising a battery holder according to any one of the preceding claims. A technical benefit may include that efficient heat redistribution can be achieved in an electrical or hybrid vehicle equipped with the described battery holder.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary battery holder according to an example.
**FIG. 2** is an exemplary battery holder according to an example.
**FIG. 3** is an exemplary battery holder according to an example.
**FIG. 4** is an exemplary battery holder according to an example.
**FIG. 5** is a vehicle comprising an exemplary battery holder according to an example.

### DETAILED DESCRIPTION

The detailed description set forth below provides information and examples of the disclosed technology with sufficient detail to enable those skilled in the art to practice the disclosure.

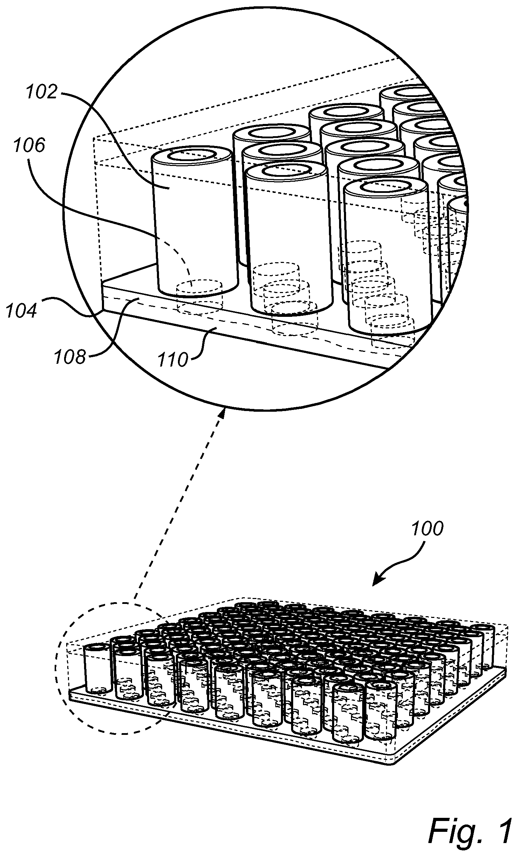

Fig. 1 is an exemplary battery holder 100 for holding a plurality of battery cells 102 in a vehicle according to an example. The battery holder has a base plate 104 comprising: a plurality of through openings 106, each opening being configured to allow venting of gas from a battery cell; and a closed compartment 108 being partially filled with a fluid 110. The through openings 106 are preferably arranged in locations corresponding to intended locations of battery cells 102 such that each battery cell is located in alignment with a corresponding through opening. Moreover, battery cells may be provided with adapted portions which are configured to vent the battery cell in case of thermal runaway, and such a vent of the battery cell is then preferably aligned with the through opening to guide gas from the battery cell in a controlled manner via the through opening 106 of the base plate 104.

The battery holder of Fig. 1 illustrates a plurality of battery cells arranged on a partially hollow base plate 104. The battery cells may increase in temperature during operation and to avoid hotspots or regions in the battery as a whole having a higher temperature, it is desirable to provide a cooling solution distributing heat evenly over the battery holder 100. During operation of a vehicle comprising the described battery holder 100, the fluid 110 in the partially filled closed compartment 108 can be expected to splash around in the compartment 108 which efficiently redistributes heat in the base plate 104. The closed compartment 108 is a fully closed and hermetically sealed compartment 108, at least during operation of a battery using the described battery holder 100.

Moreover, filling the proposed void formed by the closed compartment 108 with a fluid 110 using an optimized filling ratio leads to liquid sloshing while driving. This improves the convective heat transfer which is typically quicker than other methods of heat transfer, in turn leading to more even distribution of the heat inside the base plate 104.

Moreover, the described cooling solution requires no moving parts, no fluid connection susceptible to leaks, and no additional components outside of the base plate itself. The described battery holder 100 thereby offers a simple, compact, reliable, and cost efficient cooling solution for achieving an even heat distribution in a battery holder.

The fluid 110 in the closed compartment may be a single fluid or a mix of different fluids. Preferably, the fluid comprises a material with high specific heat having a high ability to absorb and store thermal energy. An advantage of using high heat capacity materials inside a battery holder as described herein is that the fluid can be used to reduce active cooling power for recirculated coolant and provide protection from extreme and rapid temperature fluctuations. For example, aluminum has a specific heat of 0.89 J/(k.s) and water has a specific heat of 4.18J/(k.s). If for an example water is used in the closed compartment, at the same weight and a filling ratio of 70% water, the described battery holder provides approximately 70% higher thermal mass compared to a solid aluminum plate. Furthermore, since the closed compartment is completely closed the content of the filling can be adjusted by combining different materials, such as a mix of Phase Change Materials (PCM) and liquid to control the behaviour of the fluid for increasing temperatures.

A fill level of the fluid 110 in the closed compartment may be in the range of 50% to 70% to allow for the desired movement of fluid 110 in the compartment. It should however be noted that also other fill levels can be used to the same effect as long as the compartment is not filled to 100%. In general, the fill level for a given implementation is preferable selected to achieve optimum heat transfer capabilities, i.e. to have maximum temperature uniformity while not damaging the battery holder in case of evaporation of material inside the closed compartment.

The fluid 110 comprises a phase change material which is in solid form at a normal operating temperature of the battery. The phase change material may for example be provided as particles, granules or the like which are solid at temperature below a predetermined threshold temperature. The phase change material can then be mixed into the fluid at an appropriate proportion, while maintaining the compartment only partially filled to allow splashing and motion of the mixture.

The phase change material may have a phase change temperature for transformation from solid phase to liquid phase in the range of 20°C to 30°C. The phase change material may also have a phase change temperature for transformation from solid phase to liquid phase in the range of 35°C to 45°C. The phase change material may further have a phase change temperature for transformation from solid phase to liquid phase in the range of 110°C to 130°C. The phase change materials provide additional resistance to heating at the respective phase change temperatures, where the temperature range 20°C to 30°C correspond to a normal operating temperature of the battery cells, 35°C to 45°C correspond to a temperature which is becoming harmful for the battery cells, and where a temperature in the range of 110°C to 130°C is indicative of an onset of a serious thermal runaway event.

Moreover, the fluid may advantageously be a dielectric material in order to avoid electrical issues in case of fluid leakage. The closed compartment may be damaged by melting or rupture due to for example failure of battery cells, accidents, or thermal runaway. Examples of suitable dielectric materials with high heat capacity include dielectric oils, water glycol blend mixtures, and pure water.

In a battery pack comprising the battery holder 100 and a plurality of battery cells 102, each battery cell 102 is arranged over a corresponding through opening 106 so that in case of thermal runaway of a battery cell 102, heated gas and particles can be evacuated from the battery cell 102 through the through opening 106 in the base plate 104. Heated gas is thereby separated from adjacent battery cells by the base plate 104 and the gas may also be cooled during the passage through the through opening 106. The closed compartment 108 may also comprise a plurality of sub-compartments, where each sub-compartment is partially filled with a fluid.

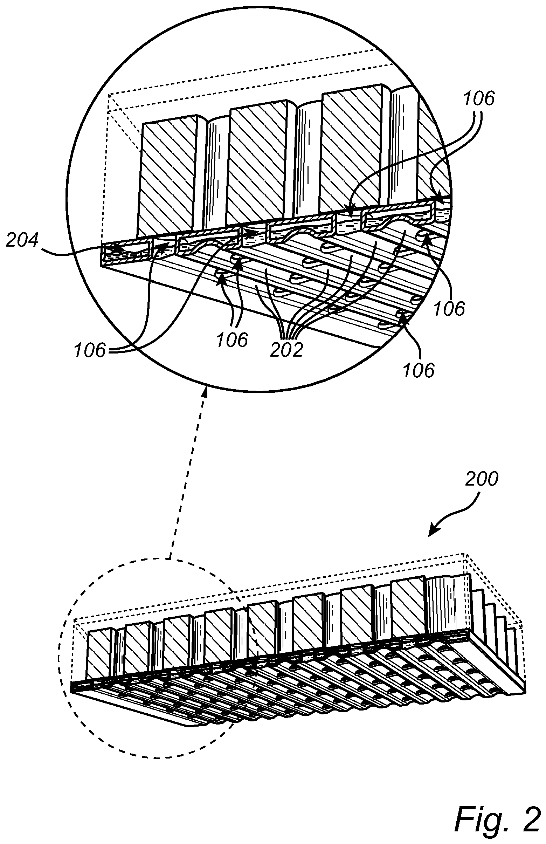

Fig. 2 illustrates an example battery holder 200 where the base plate 104 comprises a plurality of grooves 202 arranged on a side of the base plate opposite the side configured to hold the battery cell and extending to at least a first edge portion 204 of the base plate. The groove 202 may also be referred to as a trench, a channel, or the like. When the battery holder is placed on a planar support structure, the groove 202 will form a closed channel together with such a support structure on which the base plate 104 is attached. However, it would also be possible to form a channel in the base plate as such so that an opening of the channel is located at an edge of the base plate.

As further illustrated in Fig. 2, each through-opening 106 ends in a groove 202. Thereby, all battery cells 102 are provided with a flow path for heated gas which leads away from the plurality of battery cells 102 and where the heated gas is separated from the battery cells by the fluid filled compartment 108. Even though the battery cells 102 are illustrated as cylindrical battery cells, the described battery holder and base plate may equally well be used together with battery cells having other shapes.

In some examples, the one or more grooves 202 extend across the base plate from a first edge portion of the base plate to a second edge portion of the base plate opposite the first edge portion. The groove 202 thereby extends across the entire base plate. It would also be possible to arrange grooves in two directions perpendicular to each other so that the grooves form a cross-shaped channel arrangement in the base plate. The grooves could thereby in principle end on all four sides if the base plate. Preferably, additional structures for handling or guiding a gas flow are arranged adjacent to the base plate for receiving the gas flow from the end portions of the groves and for guiding a gas flow away from the battery holder.

The illustrated grooves 202 are substantially straight but it would also be possible to for grooves which are curved, meandering or having a similar shape as long as a gas flow along the groove is not impeded.

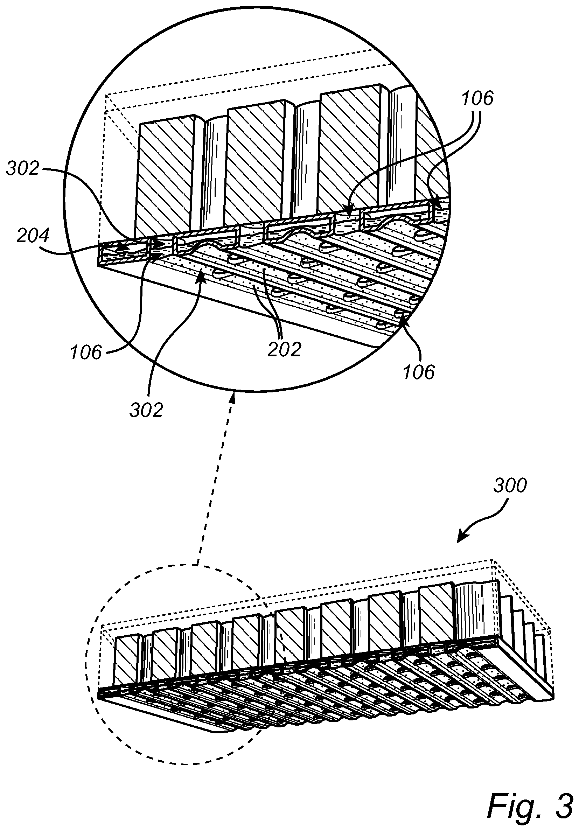

Fig. 3 illustrates an example battery holder 300 where the groove 202 comprises a protective coating 302. In particular, the external walls of the grooves 202 can be coated with a heat resistant material such as glass fiber for resistance against high temperature gases and particles coming from a cell during thermal runaway. The coating 302 thereby further reduces the risk of damage to adjacent battery cells in case of thermal runaway in one battery cell. Also, the internal walls of the through openings 106 may advantageously be provided with the described coating.

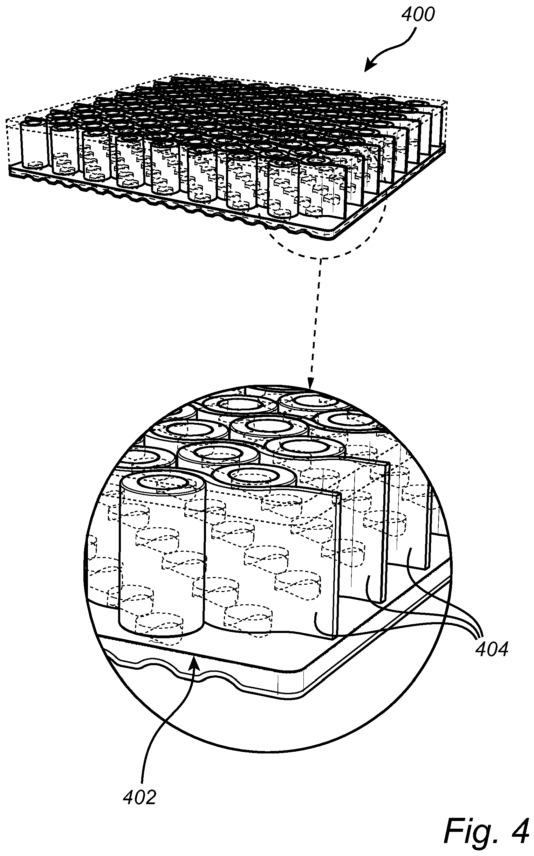

Fig. 4 illustrates an example battery holder 400 where an interior surface of the closed compartment comprises surface structures 402 configured to facilitate heat transfer between the base plate 104 and the fluid 110. The surface structures 402 increase the surface area of the internal wall of the base plate 104 forming the closed compartment 108 so that more heat can be transferred from the base plate as such to the fluid 110 when the fluid comes into contact with the internal wall comprising surface structures 402.

Fig. 4 further illustrates that the battery holder may comprise dividing walls 404 configured to form cell compartments for holding battery cells. In the illustrated examples, the dividing walls 404 are arranged on the base plate to form a wave shape so that cylindrical battery cells can be arranged in a space efficient manner in the compartments formed by the dividing walls 404. The walls may also form part of an active cooling system where a coolant flows in a closed loop in the walls.

Fig. 4 further illustrates that the closed compartment 108 extends throughout the extension of the base plate 104 in the plane of the base plate 104, where the plane of the base plate is defined by the length and width of the base plate (i.e. the xy-plane).

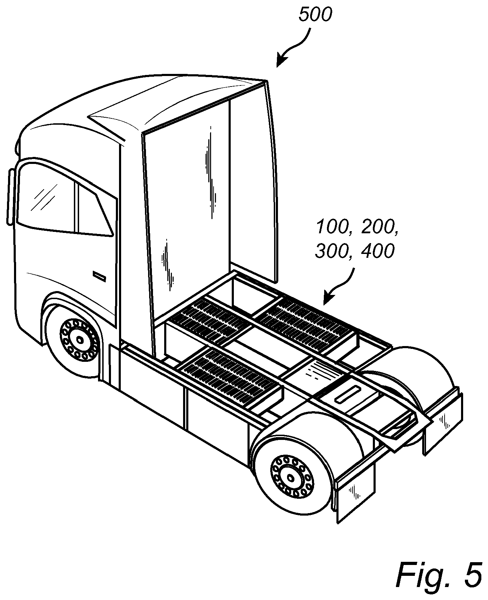

Fig. 5 schematically illustrates a vehicle 500 comprising a battery holder 100, 200, 300, 400 according to any one of the preceding examples.

## Claims

1. A battery holder (100) for holding a plurality of battery cells (102) for a vehicle, the battery holder having a base plate (104) comprising:
a plurality of through openings (106), each opening being configured to allow venting of gas from a battery cell; and
a closed compartment (108) being partially filled with a fluid (110), wherein the fluid comprises a phase change material, **characterized in that**
the phase change material is in solid form at a normal operating temperature of the battery.

2. The battery holder according to claim 1, wherein the closed compartment extends throughout the extension of the base plate in the plane of the base plate.

3. The battery holder according to claim 1, wherein the closed compartment comprises a plurality of sub-compartments, each sub-compartment being partially filled with a fluid.

4. The battery holder according to any one of the preceding claims, wherein the base plate further comprises at least one groove (202) arranged on a side of the base plate opposite the side configured to hold the battery cells and extending to at least a first edge portion (204) of the base plate, and wherein each through-opening ends in the at least one groove.

5. The battery holder according to claim 4, wherein the at least one groove extends across the base plate from a first edge portion of the base plate to a second edge portion of the base plate opposite the first edge portion.

6. The battery holder according to claim 4 or 5, wherein the at least one groove is substantially straight.

7. The battery holder according to any one of claims 4 to 6, wherein the at least one groove comprises a protective coating (302).

8. The battery holder according to claim 7, wherein the protective coating comprises glass fiber.

9. The battery holder according to any one of the preceding claims, wherein an interior surface of the closed compartment comprises surface structures (402) configured to facilitate heat transfer between the base plate and the fluid.

10. The battery holder according to any one of the preceding claims, wherein the through openings comprise sidewalls located between the opening and the closed compartment so that the fluid is in contact with the sidewalls.

11. The battery holder according to any one of the preceding claims, wherein the phase change material has a phase change temperature for transformation from solid phase to liquid phase in the range of 20°C to 30°C, in the range of 35°C to 45°C, and/or in the range of 110°C to 130°C.

12. The battery holder according to any one of the preceding claims, wherein a fill level of fluid in the closed compartment is in the range of 50% to 70%.

13. A vehicle (500) comprising a battery holder (100, 200, 300, 400) according to any one of the preceding claims.

## Patentansprüche

1. Batteriehalter (100) zum Halten einer Vielzahl von Batteriezellen (102) für ein Fahrzeug, wobei der Batteriehalter eine Basisplatte (104) aufweist, umfassend:
eine Vielzahl von Durchgangsöffnungen (106), wobei jede Öffnung dazu konfiguriert ist, zu ermöglichen, Gas aus einer Batteriezelle abzulassen; und
eine geschlossene Kammer (108), die teilweise mit einem Fluid (110) gefüllt ist, wobei das Fluid ein Phasenwechselmaterial umfasst, **dadurch gekennzeichnet, dass**
das Phasenwechselmaterial bei einer normalen Betriebstemperatur der Batterie in fester Form vorliegt.

2. Batteriehalter nach Anspruch 1, wobei sich die geschlossene Kammer über die gesamte Erstreckung der Basisplatte in der Ebene der Basisplatte erstreckt.

3. Batteriehalter nach Anspruch 1, wobei die geschlossene Kammer eine Vielzahl von Teilkammern umfasst, wobei jede Teilkammer teilweise mit einem Fluid gefüllt ist.

4. Batteriehalter nach einem der vorhergehenden Ansprüche, wobei die Basisplatte ferner mindestens eine Rille (202) umfasst, die auf einer Seite der Basisplatte gegenüber der Seite angeordnet ist, die dazu konfiguriert ist, die Batteriezellen zu halten, und sich bis zu mindestens einem ersten Kantenabschnitt (204) der Basisplatte erstreckt, und wobei jede Durchgangsöffnung in der mindestens einen Rille endet.

5. Batteriehalter nach Anspruch 4, wobei sich die mindestens eine Rille über die Basisplatte hinweg von einem ersten Kantenabschnitt der Basisplatte zu einem zweiten Kantenabschnitt der Basisplatte, der dem ersten Kantenabschnitt gegenüberliegt, erstreckt.

6. Batteriehalter nach Anspruch 4 oder 5, wobei die mindestens eine Rille im Wesentlichen gerade ist.

7. Batteriehalter nach einem der Ansprüche 4 bis 6, wobei die mindestens eine Rille eine Schutzbeschichtung (302) umfasst.

8. Batteriehalter nach Anspruch 7, wobei die Schutzbeschichtung Glasfaser umfasst.

9. Batteriehalter nach einem der vorhergehenden Ansprüche, wobei eine innere Oberfläche der geschlossenen Kammer Oberflächenstrukturen (402) umfasst, die dazu konfiguriert sind, die Wärmeübertragung zwischen der Basisplatte und dem Fluid zu erleichtern.

10. Batteriehalter nach einem der vorhergehenden Ansprüche, wobei die Durchgangsöffnungen Seitenwände umfassen, die sich zwischen der Öffnung und der geschlossenen Kammer befinden, so dass das Fluid mit den Seitenwänden in Kontakt steht.

11. Batteriehalter nach einem der vorhergehenden Ansprüche, wobei das Phasenwechselmaterial eine Phasenwechseltemperatur für den Übergang von der festen Phase in die flüssige Phase im Bereich von 20 °C bis 30 °C, im Bereich von 35 °C bis 45 °C und/oder im Bereich von 110 °C bis 130 °C aufweist.

12. Batteriehalter nach einem der vorhergehenden Ansprüche, wobei der Füllstand des Fluids in der geschlossenen Kammer im Bereich von 50 % bis 70 % liegt.

13. Fahrzeug (500), das einen Batteriehalter (100, 200, 300, 400) nach einem der vorhergehenden Ansprüche umfasst.

## Revendications

1. Support de batterie (100) destiné à contenir une pluralité d'éléments de batterie (102) pour un véhicule, le Support de batterie ayant une plaque de base (104) comprenant :
une pluralité d'ouvertures traversantes (106), chaque ouverture étant configurée pour permettre l'évacuation du gaz d'un élément de batterie ; et
un compartiment fermé (108) qui est partiellement rempli d'un fluide (110), le fluide comprenant un matériau à changement de phase, **caractérisé en ce que**
le matériau à changement de phase est sous forme solide à une température de fonctionnement normale de la batterie.

2. Support de batterie selon la revendication 1, dans lequel le compartiment fermé s'étend sur toute l'étendue de la plaque de base dans le plan de la plaque de base.

3. Support de batterie selon la revendication 1, dans lequel le compartiment fermé comprend une pluralité de sous-compartiments, chaque sous-compartiment étant partiellement rempli d'un fluide.

4. Support de batterie selon l'une quelconque des revendications précédentes, dans lequel la plaque de base comprend en outre au moins une rainure (202) agencée sur un côté de la plaque de base opposé au côté configuré pour maintenir les éléments de batterie et s'étendant vers au moins une première partie de bord (204) de la plaque de base, et dans lequel chaque ouverture traversante se termine dans l'au moins une rainure.

5. Support de batterie selon la revendication 4, dans lequel l'au moins une rainure s'étend à travers la plaque de base depuis une première partie de bord de la plaque de base jusqu'à une seconde partie de bord de la plaque de base opposée à la première partie de bord.

6. Support de batterie selon la revendication 4 ou 5, dans lequel l'au moins une rainure est sensiblement droite.

7. Support de batterie selon l'une quelconque des revendications 4 à 6, dans lequel l'au moins une rainure comprend un revêtement protecteur (302).

8. Support de batterie selon la revendication 7, dans lequel le revêtement protecteur comprend des fibres de verre.

9. Support de batterie selon l'une quelconque des revendications précédentes, dans lequel une surface intérieure du compartiment fermé comprend des structures de surface (402) configurées pour faciliter le transfert de chaleur entre la plaque de base et le fluide.

10. Support de batterie selon l'une quelconque des revendications précédentes, dans lequel les ouvertures traversantes comprennent des parois latérales situées entre l'ouverture et le compartiment fermé de sorte que le fluide soit en contact avec les parois latérales.

11. Support de batterie selon l'une quelconque des revendications précédentes, dans lequel le matériau à changement de phase a une température de changement de phase pour la transformation de la phase solide à la phase liquide dans la plage de 20°C à 30°C, dans la plage de 35°C à 45°C, et/ou dans la plage de 110°C à 130°C.

12. Support de batterie selon l'une quelconque des revendications précédentes, dans lequel un niveau de remplissage de fluide dans le compartiment fermé est dans la plage de 50 % à 70 %.

13. Véhicule (500) comprenant un support de batterie (100, 200, 300, 400) selon l'une quelconque des revendications précédentes.
